# EUROPÄISCHE PATENTSCHRIFT

(11) **EP 1 511 598 B1**
(45) Veröffentlichungstag und Bekanntmachung des Hinweises auf die Patenterteilung: **03.03.2010**
(21) Anmeldenummer: 03756983.7
(22) Anmeldetag: 16.01.2003
(51) Int. Cl.: B24B 33/02, B24B 41/02, B23Q 5/10, B23Q 5/28, B24B 41/04

(54) **MASCHINE ZUR FEINSTBEARBEITUNG DURCH HONEN**
MACHINE FOR SUPERFINISHING BY HONING
MACHINE D'USINAGE FIN PAR PIERRAGE

(30) Priorität: 10.06.2002 DE 10225514
(43) Veröffentlichungstag der Anmeldung: 09.03.2005
(73) Patentinhaber: KADIA Produktion GmbH + Co., 72622 Nürtingen (DE)
(72) Erfinder: KLEIN, Gerhard, 72644 Oberboihingen (DE)
(74) Vertreter: Dreiss
(86) Internationale Anmeldenummer: PCT/EP2003/000379
(87) Internationale Veröffentlichungsnummer: WO 2003/103896

(56) Entgegenhaltungen:
- EP-A- 0 893 196
- DE-A- 19 646 142
- US-A- 3 645 047
- US-A- 4 463 490
- US-A1- 2001 018 321

## Beschreibung

Die Erfindung betrifft eine Maschine zur Feinstbearbeitung von Werkstücken durch Honen oder Feinstschleifen nach dem Oberbegriff des Patentanspruches 1.

Dabei kommen Honmaschinen in Betracht, bei denen ein mit einem entsprechenden Belag (z.B. aus Diamanten oder Korund) belegtes Hon-Werkzeug in eine Bohrung eingeführt und gleichzeitig gedreht und hin und her bewegt wird, so dass die Innenfläche der Bohrung bearbeitet wird. Um dem Abrieb der Honwerkzeuge Rechnung zu tragen, sind diese u.a. so ausgebildet, dass sie mit einem Honbelag versehene Honleisten aufweisen, die durch eine mit dem Honwerkzeug mitdrehende jedoch innerhalb desselben axial verschiebbare Aufweitstange in radialer Richtung verstellt werden können.

Es kommen weiter auch solche Maschinen in Betracht, bei denen ein Werkstück in einer Richtung, die gleich der Achsrichtung der Drehbewegung des Werkzeugs ist, auf das Werkstück zugestellt werden muss. Dies können sowohl Honwerkzeuge (z.B. beim sog. "Dornhonen") als auch Läppwerkzeuge sein. Es können aber auch Feinstschleifwerkzeuge sein, um z.B. bereits vorgeschliffene Ventilsitzflächen einer abschließenden Feinstbearbeitung zu unterziehen, bei der genau definiert nur wenige Mikrometer abgetragen werden und gleichzeitig eine Oberflächenverbesserung erzielt werden müssen.

Bei Honmaschinen erfolgt bisher die Hubbewegung des die Honspindel tragenden Laufschlittens im Allgemeinen durch einen hydraulischen Antrieb, während die Drehbewegung der Honspindel und damit auch die des darin aufgenommenen Honwerkzeugs durch einen üblichen Elektromotor herbeigeführt wird. Beim Honen entsteht durch die gleichzeitige Drehbewegung und Hubbewegung des Honwerkzeugs ein für diese Bearbeitung typisches Kreuzschliffmuster an der zu bearbeitenden Oberfläche, das für die Trag- und Schmiereigenschaften des bearbeiteten Werkstücks, sowie für die Genauigkeit der Einpassung weiterer Bauteile (z.B. Kolben) und von Bedeutung ist. Bei der Bearbeitung kleiner Bohrungen von nur wenigen Millimeter Durchmesser und gleichzeitiger Steigerung der Drehgeschwindigkeit des Honwerkzeug zur Verkürzung der Bearbeitungszeit muss die Hubgeschwindigkeit entsprechend gesteigert werden. Die zur Herbeiführung der Hubbewegung eingesetzten hydraulischen Antriebe kommen dabei an ihre systemimmanenten betriebsmäßigen Grenzen hinsichtlich Geschwindigkeit und Umsteuerbarkeit. Das gilt umso mehr, wenn die Hübe klein sind, wie dies der Fall ist, wenn die Bearbeitungstiefe der Bohrungen im Bereich von wenigen Millimetern liegt. Eine Honmaschine der eingangs genannten Art ist bereits aus der DE 196 461 42 A1 bekannt. Bei dem dort gezeigten Aufbau ist die Führung des bewegten Teils des Linearmotors in vertikaler Richtung infolge des klassischen Aufbaus der Honmaschine mit einem Biegemoment belastet, da der Antrieb der Honspindel durch einen neben dem Honspindelgehäuse angeordneten Elektromotor und die Zustelleinrichtung durch einen ebenfalls zur Achse der Honspindel versetzt angeordneten Motor gebildet wird.

Weitere Antriebe von Werkzeugmaschinen durch Linearmotoren sind aus der DE 101 12 883 A1, betreffend eine Linsenbearbeitungsmaschine, aus der DE 100 28 791 A1 und der EP 0 893 196 A2, beide betreffend eine Portalschleifmaschine mit Antrieb des Portals, sowie aus der DE 195 31 507 A1, betreffend eine Maschine zum Schleifen der Hublagerzapfen von Kurbelwellen, bekannt geworden. Für sie stellt sich das Problem der Erhöhung der Hubfrequenz beim Honen von Bohrungen mit kleinem Durchmesser, wie es infolge des Zusammenhangs zwischen Drehzahl und Hubgeschwindigkeit beim Honen gegeben ist, nicht. Sie betreffen auch sämtlich die horizontale Verschiebung einer Einheit, bei der die Honeinheit in Hubrichtung ihr Gewicht nicht anheben muss.

Der Erfindung liegt daher die Aufgabe zugrunde, eine Vereinfachung des gesamten Aufbaus zu erreichen, der eine höhere Hubgeschwindigkeit und Hubfrequenz ermöglicht, so dass auch kleine und kurze Bohrungen mit hoher Drehgeschwindigkeit des Honwerkzeugs genauer und schneller als seither bearbeitet werden können.

Die Lösung dieser Aufgabe erfolgt mit den im Kennzeichen des Patentanspruches 1 angegebenen Merkmalen.

Durch die Erfindung ergibt sich ein Aufbau, der es erlaubt, Hubfrequenz und Hubgeschwindigkeit im Vergleich zu den bekannten Anordnungen zu erhöhen und damit auch sehr kleine Bohrungen schneller und exakter zu bearbeiten. Bei Benutzung eines Honwerkzeugs mit radial verstellbaren Honleisten ergibt sich dabei die Vereinfachung, dass dann auch die Aufweitstange zur radialen Verstellung der Honleisten, die von einer in der Honmaschine angeordneten Schubstange betätigt wird, sehr viel einfacher als seither realisiert werden kann. Zu diesem Zweck ist der Servomotor dadurch koaxial an das Kupplungsgehäuse anflanscht, das seinerseits in linearer Verlängerung des Spindelgehäuses angeordnet ist.

Die Erfindung lässt sich also auch dazu einsetzen, kleinste genau definierte Zustellbewegungen eines Feinstschleifwerkzeuges, z. B. zur Bearbeitung eines Ventilsitzes, exakt durchzuführen. Eine solche Maschine ist in Anspruch 3 definiert.

Ausführungsbeispiele der Erfindung werden im Folgenden unter Bezugnahme auf die beigefügten Zeichnungen näher beschrieben. Es stellen dar:
- Figur 1: eine schematische Ansicht einer Honmaschine, die als Ausführungsbeispiel der Erfindung ausgestaltet ist;

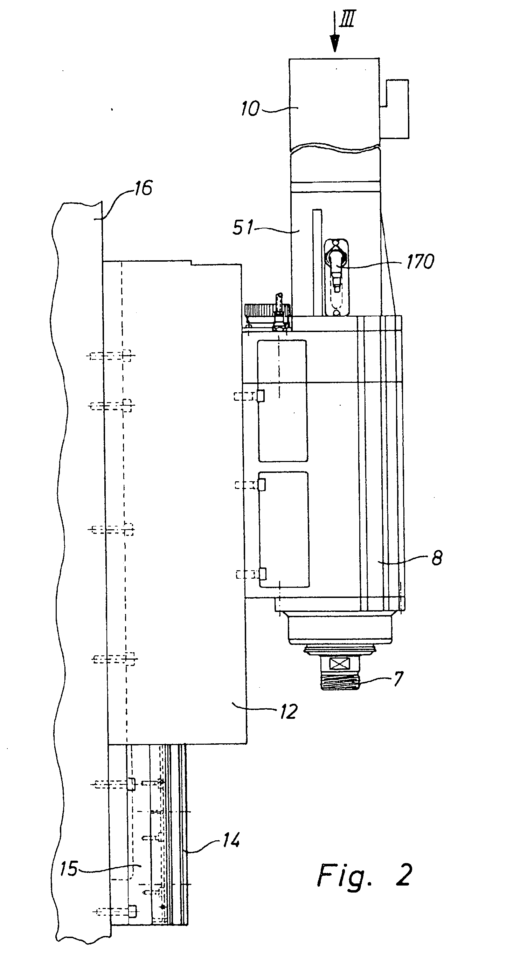

- Figur 2: eine Darstellung des Honspindelgehäuses 8, der Honspindel 7, des Laufschlittens 12 und der Laufschienen 14, mit denen der die Laufschienen 14 tragende Träger 15 am Maschinenrahmen 16 angeordnet ist.
- Figur 3: eine Ansicht in Richtung der Pfeile III-III in Figur 2;
- Figur 4: einen Schnitt durch das Spindelgehäuse 8;
- Figur 5: einen Schnitt durch das an das Spindelgehäuse 8 angeflanschte Kupplungsgehäuse 51;
- Figur 6: einen Schnitt durch das Kupplungsgehäuse 51 bei einem zweiten Ausführungsbeispiel der Erfindung, das insbesondere für kleine Zustellbewegungen in axialer Richtung geeignet ist,
- Figur 7: eine Ansicht in Richtung der Pfeile VII-VII in Figur 6;
- Figur 8: eine schematische Darstellung eines Werkstücks 301 und eines dazu gehörigen Werkzeugs 300, wie es mit dem Ausführungsbeispiel nach den Figuren 6 und 7 eingesetzt werden kann.

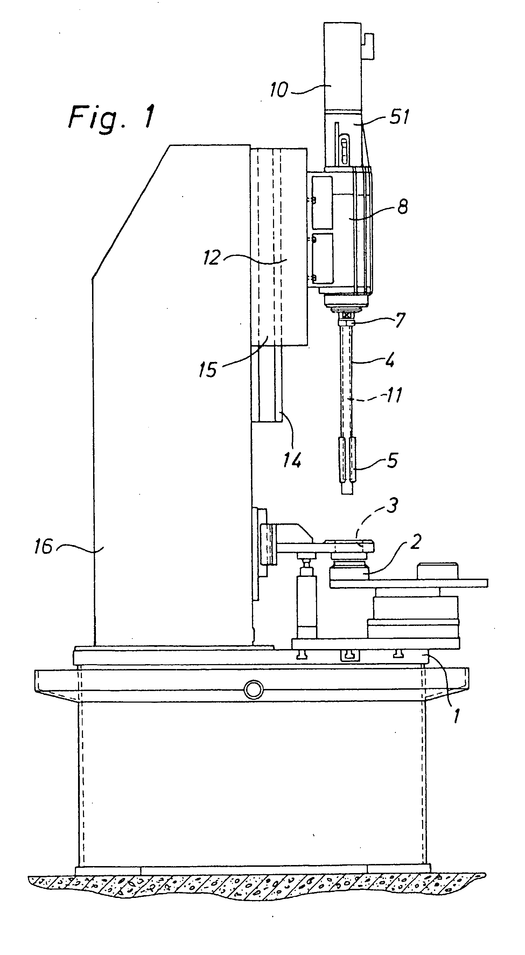

Figur 1 zeigt eine einer Honmaschine. Auf einer Bearbeitungsplattform 1 ist ein Werkstück 2 aufgespannt, dessen Bohrung 3 gehont werden soll. Das Honwerkzeug 4, das in einem Konus 6 am Ende der Honspindel 7 aufgenommen wird, wird mit der Honspindel 7 auf- und abbewegt. Dadurch wird in bekannter Weise der Hub des Honvorgangs, wie er Teil des Honverfahrens ist, durchgeführt. Die Axialverschiebung der Honspindel 7 dient der Erzeugung dieses Hubes. Das Honwerkzeug 4 weist radial verstellbare Honleisten 5 auf. Die Honspindel 7 wird von einem Elektromotor 9, der in das Spindelgehäuse 8 integriert ist, angetrieben. Am (in Figur 1) oberen Ende des Spindelgehäuses 8 ist ein Kupplungsgehäuse 51 und an diesem ein Servomotor 10 koaxial angeflanscht. Der Servomotor 10 dient zur Achsialverschiebung einer Aufweitstange 11, die in dem Honwerkzeug 4 angeordnet ist und die durch die sich drehende Honspindel 7 hindurch eine radiale Verstellung der Honleisten 5 bewirkt.

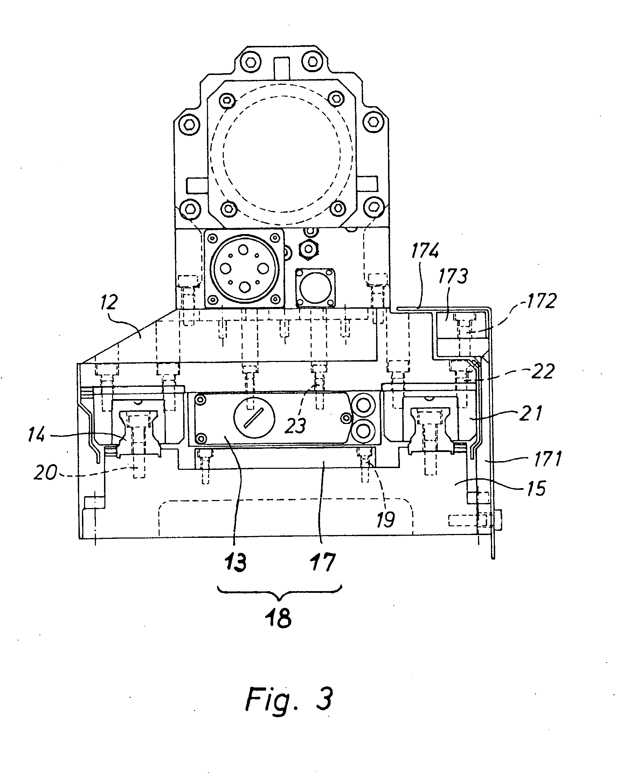

Das Spindelgehäuse 8 ist auf einem Laufschlitten 12 angeordnet, in den der Primärteil 13 eines Linearmotors 18, integriert ist. Der Primarteil 13 bildet zusammen mit dem Sekundärteil 17, der in dem sich vertikal erstreckenden Träger 15 integriert ist (vgl. Figur 3), den Linearmotor 18. Dieser Linearmotor 18 bewirkt die Hubbewegung des Spindelgehäuses 8. Der Träger 15 ist an den Maschinenrahmen 16 abgebaut. Der Laufschlitten 12 mit dem integrierten Primärteil 13 ist auf Laufschienen 14 auf und ab beweglich. Die Laufschienen 14 sind die am Träger 15 fest angeordnet. Der Primärteil 13 ist der bewegte Teil und der Sekundärteil 17 der ortsfeste Teil des Linearmotors 18.

Zur Bearbeitung der Bohrung 3 wird das Spindelgehäuse 8 mit der Honspindel 7 und dem darin aufgenommenem Honwerkzeug 4 so weit abgesenkt, dass die Honleisten 5 in die Bohrung 3 eintauchen. Dann wird die Honspindel 8 gleichzeitig hin und her (auf und ab) bewegt und gedreht. Die beiden Bewegungen werden so aufeinander abgestimmt, dass auf der Werkstückoberfläche das für das Honen typische "Kreuzschliffmuster" mit einem Winkel von z.B. 10° bis 50° entsteht. Um dies zu erreichen, ist bei kleinen Durchmessern der zu bearbeitenden Bohrung und hoher. Drehzahlen eine relativ schnelle Auf- und Abbewegung der Honspindel 8 erforderlich, die durch den Linearmotor 18 gewährleistet wird. Mit einer erfindungsgemäßen Honmaschine können z.B. bei einer Hublänge von 80 mm eine Hubgeschwindigkeit von 50 m/min bei einer Umsteuergenauigkeit von ≤ 0,05 mm (Umsteuern ist der Wechsel von der Bewegung in der einen Richtung in die umgekehrte Richtung) oder bei einer Hublänge von 20 mm eine Hubgeschwindigkeit von 25 m/min bei einer Umsteuergenauigkeit von ≤ 0,04 mm realisiert werden.

Wie aus Figur 3 zu ersehen, ist der sekundärteil 17 des Linearmotors 18 auf dem Träger 15 mit Schrauben 19 befestigt. Die Laufschienen 14 sind auf dem Träger 15 mit Schrauben 20 befestigt. Das Profil der Laufschienen 14 entspricht dem Profil der Gleitelemente 21, die mit Schrauben 22 am Laufschlitten 12 befestigt sind. Im Laufschlitten 12 ist der Primärteil 13 des Linearmotors 18 mit Schrauben 23 befestigt.

Der Aufbau von Linearmotoren ist dem Fachmann geläufig. Eine genauere Beschreibung ist daher hier nicht erforderlich. Linearmotoren können von verschiedenen Herstellern bezogen werden. Es handelt sich dabei um Antriebselemente, die aus einem normalen Drehstromelektromotor gedanklich dadurch entstehen, dass man den Stator "aufschneidet" und in eine Ebene abwickelt. Der Rotor ist ebenfalls flächig ausgebildet, so dass er sich entlang der linearen Erstreckung des Stators bewegt und zwar entsprechend dem entlang den Wicklungen des Stators wandernden elektromagnetischen Wechselfeld. Im vorliegenden Fall entspricht der Sekundärteil 17 dem Stator, der Primärteil 13 dem Rotor eines Elektromotors. Es handelt sich um eine Synchronmaschine, die als Langstatormotor ausgeführt ist. Die Steuerung der Geschwindigkeit erfolgt über eine Frequenzvariation in Umrichtern einer zugeordneten Steuerung. Eine - programmierbare - Steuerung (nicht gezeigt) erlaubt die Einstellung entsprechender Geschwindigkeiten wie oben angegeben.

Am Träger 15 ist mit Schrauben, von denen nur eine sichtbar ist, ein Traggestell 171 befestigt, auf dem mit Schrauben 172 ein Messwertgeber 173 angeordnet ist. Er enthält in an sich bekannter Weise Messmarkierungen (nicht dargestellt), die bei Bewegung des Laufschlittens 12 senkrecht zur Zeichenebene der Figur 3 in entsprechenden am Laufschlitten angebrachten Sensoren (nicht gezeigt) Messsignale erzeugen, die die momentane Position des Laufschlittens 12 anzeigen und an die Steuerung (nicht gezeigt) weitergeben. 174 ist eine Abdeckplatte.

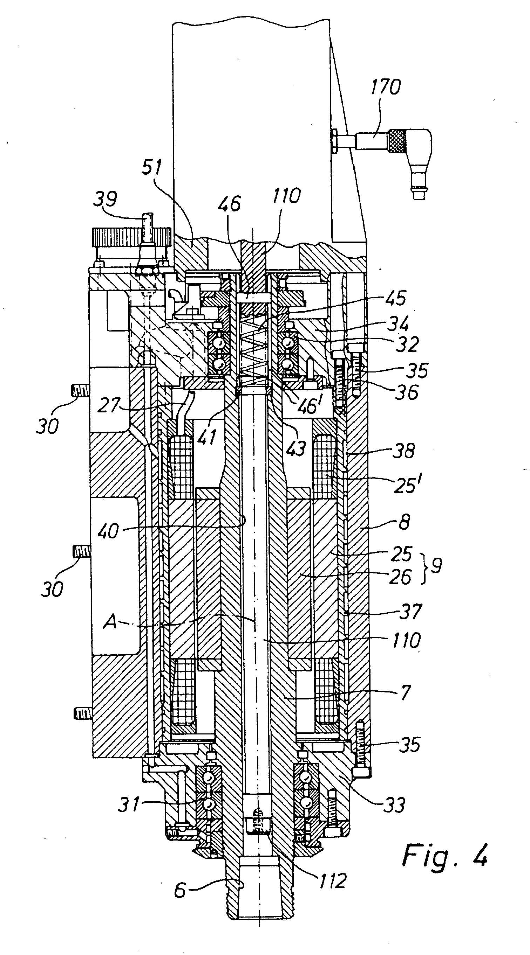

Der Aufbau des Spindelgehäuses 8 ergibt sich aus Figur 4. In das Spindelgehäuse 8 ist der Elektromotor 9 integriert. Er bewirkt die Drehung der Honspindel und besteht aus Stator 25 mit Wicklungen 25' und Rotor 26. Der Stator 25 ist in eine Hülse 37 eingepresst, die mittels Schrauben 36 mit den Stirnplatten 33, 34 verschraubt ist (nur bei 34 gezeigt). Der Rotor 26 ist außen auf die Honspindel 7 aufgepresst. Die Stromversorgung des Stators 25 erfolgt über die Anschlüsse 27. Der Rotor 26 ist ein Permanentmagnet. Mittels Schrauben 30 ist das Spindelgehäuse 8 mit dem Laufschlitten 12 verschraubt. Die Lagerung der Honspindel 7 im Spindelgehäuse 8 erfolgt durch Lager 31 bzw. 32 in einer vorderen bzw. einer hinteren Stirnplatte 33 bzw. 34. Die Stirnplatten 33 bzw. 34 sind mit dem Spindelgehäuse 8 mittels Schrauben 35 verschraubt. In der Hülse 37 befindet sich ein wendelförmiger Kühlkanal 38, dem über die Kühlmittelzuleitung 39 Kühlmittel zugeführt wird. Die Ableitung des Kühlmittels ist nicht dargestellt; sie befindet sich auf der anderen Seite.

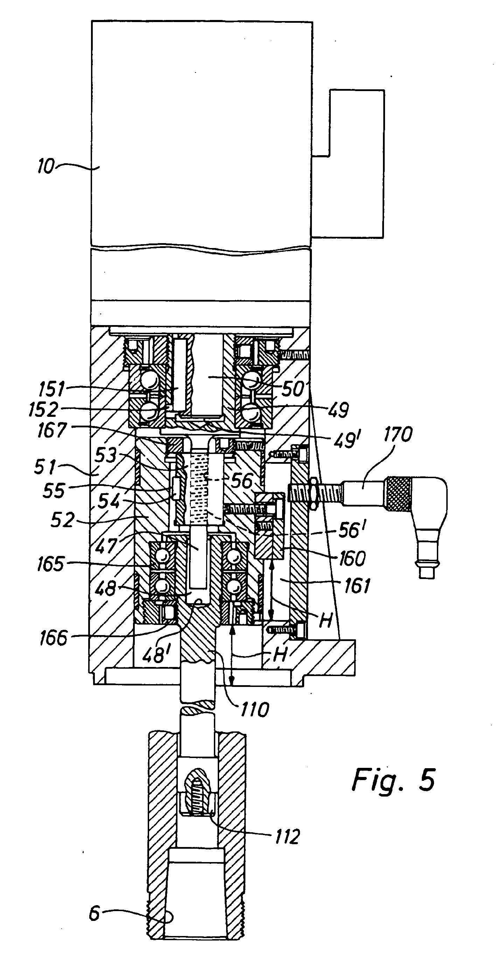

Das sich oben an die Anschlussplatte 34 anschließende Kupplungsgehäuse 51 und der zur Verstellung der Aufweitstange 11 der Honleisten 5 des Honwerkzeugs 4 dienende Servomotor 10 sind in den Figuren 4 und 5 dargestellt.

Die Honspindel 7 ist durchgehend mit einer Bohrung 40 versehen, in der die Schubstange 110 in Achsrichtung verschiebbar angeordnet ist. Am unteren Ende der Schubstange 110 ist eine Bohrung 112 mit Innengewinde vorgesehen, in die die Aufweitstange 11 fest eingeschraubt wird, so dass Schubstange 110 und Aufweitstange 11 eine Einheit bilden und gemeinsam in Längsrichtung (Achsrichtung) der Drehachse verschiebbar sind. Damit erfolgt eine radiale Verschiebung der Honleisten 5 nach außen. Derartige Honwerkzeuge 4 sind bekannt. Sie funktionieren derart, dass die Honleisten durch Federn radial nach innen gezogen werden und auf ihrer Innenseite schräg verlaufende Stellflächen aufweisen, die mit entsprechend schräg verlaufenden Stellflächen am Ende der Aufweitstange 11 so zusammenwirken, dass sich bei axialer Verschiebung der Aufweitstange 11 die radiale Verstellung der Honleisten 5 ergibt (Spreizmechanismus).

Die Schubstange 110 und mit ihr die Aufweitstange 11 drehen sich mit der Honspindel 7 mit, sind aber gleichwohl in ihr, wie erwähnt, axial (in Längsrichtung) verschiebbar. Dies ist dadurch verwirklicht, dass die Schubstange 110 von einem Stift 46 durchsetzt ist, dessen Enden in gegenüberliegenden Nuten 46' in der Honspindel 7 geführt sind. In der Honspindel 7 hat die Bohrung 40 einen Absatz 43, an den ein Ring 41 durch eine Feder 45 angedrückt wird, die sich mit ihrem anderen Ende am Stift 46 abstützt. In Ruhestellung wird die Schubstange 110 durch die Feder 45 in ihre in Figur 4 gezeigte äußerste obere Lage gedrückt. Die Schubstange 110 kann dann gegen die Kraft der Feder 45 nach unten verschoben werden.

Der Stößel 47 ist Fortsatz eines Kupplungsstückes 49, in dessen axiale Ausnehmung 49' die Abtriebswelle 150 des Servomotors 10 hineinragt. Die Kopplung in Drehrichtung erfolgt durch eine Nut-/Federverbindung, gebildet durch eine Nut 152 und den Keil ("Feder") 151.

Das Kupplungsgehäuse 51 ist mit der vorderen Stirnplatte 34 des Spindelgehäuses 8 verschraubt. Die Schrauben sind nicht gezeigt. In das Kupplungsgehäuse 51 ist eine Hülse 52 eingesetzt. Die Hülse 52 ist im Kupplungsgehäuse axial verschiebbar, da ein in die Hülse 52 eingeschraubter und radial über diese hervorstehender Klotz 160 in eine Nut 161 in der Hülse hineinragt und in dieser geführt ist. Eine Verschiebung der Hülse 52 gegenüber den Kupplungsgehäuse 51 um den Hub H ist somit möglich. In der Hülse 52 ist das obere Ende der Schubstange 110 mittels Lager 165 drehbar gelagert. Die Innenschalen der Lager 165 sind mit der Schubstange fest verbunden. Zur Sicherung des Lagers 165 ist ein Deckel 166 mit der Schubstange 110 verschraubt.

In der Hülse 52 ist ferner eine Verstellhülse 53 mit dieser mitdrehend aufgenommen. Diese Verbindung erfolgt auch durch eine Nut-/Federverbindung, gebildet durch den Keil 54 und die Nut 55. Die Verstellhülse 53 ist von einer Bohrung durchsetzt, die ein Innengewinde 56 aufweist. In dieses greift ein Außengewinde 56' des Stößels 47 ein. Die Verstellhülse 53 ist in der Hülse 52 durch einen Deckel 167 gesichert, der mit der Hülse 52 verschraubt ist. Dreht sich also der Servomotor 10 und demgemäß auch seine Abtriebswelle 50, so dreht sich in Folge der Nut-/Federverbindung 151, 152 auch das Kupplungsstück 49. In Folge des Eingriffs der Gewinde 56, 56' verschiebt sich die Hülse 52 in Axialrichtung so und mit ihr die Schubstange 110 nach unten gegen die Kraft der Feder 45. Mit dieser verschriebt sich die Aufweitstange 11 und bewirkt so innerhalb des Honwerkzeugs 4, wie erwähnt, die radiale Verstellung der Honleisten 5.

170 ist ein Sensor, der die gezeigte Endlage der aus Hülse 52, Klotz 160, Lager 165 und Schubstange 110 bestehenden Einheit feststellt und ein entsprechendes Messsignal an die Steuerung (nicht angezeigt) weitergibt.

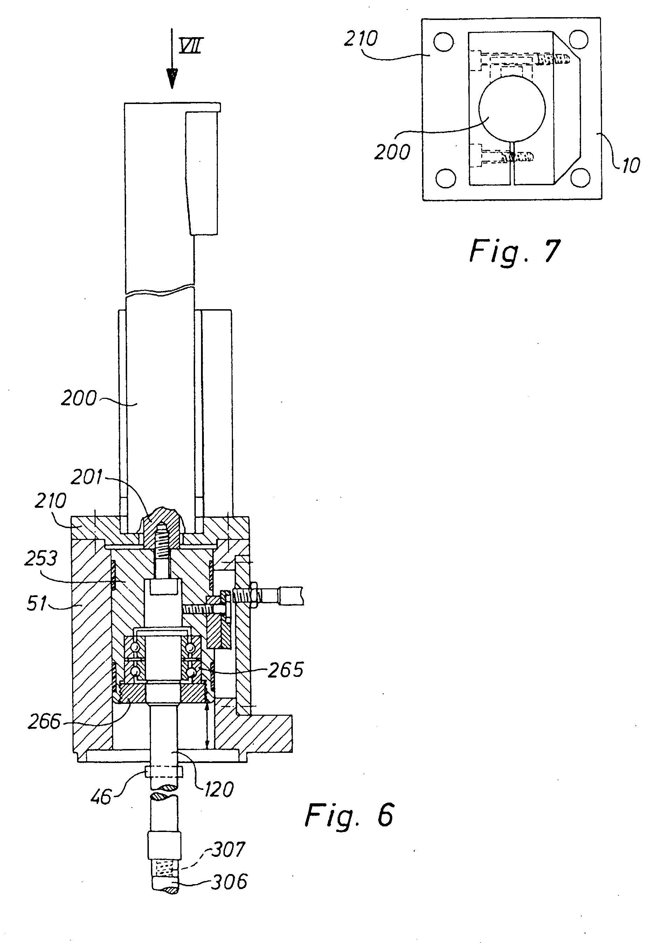

Ein weiteres Ausführungsbeispiel wird im Folgenden an Hand der Fig. 6 und 7 beschrieben. Bei ihm wird auch der Servomotor 10 durch einen Linearmotor ersetzt und dient zur Zustellung eines Feinstbearbeitungswerkzeuges 300, da am Ende der Stange 306 angeordnet ist. Diese ist mit der Schubstange 120 verbunden. Die Schubstange 120 ist mittels Lager 265 in der Verstellhülse 253 drehbar gelagert, wobei der Deckel 266 in die Verstellhülse 253 eingeschraubt sind, so dass die Schubstange 120 in der Verstellhülse 253 zwar drehbar aber nicht gegenüber ihr in axialer Richtung verschiebbar ist. Mit der Verstellhülse 253 ist der Läufer, d.h. der bewegliche Primärteil 201 eines weiteren Linearmotors 200, fest verbunden. Der Linearmotor 200 weist außerdem noch einen Sekundärteil (nicht gezeigt) auf. Es handelt sich dabei um eine Bauart eines Linearmotors, bei der der Läufer rund und der Innenraum des Stators ebenfalls rund ausgebildet sind. Derartige Bauformen von Linearmotoren sind auch per se bekannt. In ersichtlicher Weise kommt man also durch die Verwendung eines Linearmotors auch für die Stellbewegung der Schubstange 110 und mit ihr verbunden der Stange 306 mit sehr viel weniger Bauteilen aus, die auch einem weitaus geringeren Verschleiß unterliegen. Figur 7 zeigt die Aufhängung dieses weiteren Linearmotors 200 mit Hilfe einer Klemmplatte 210.

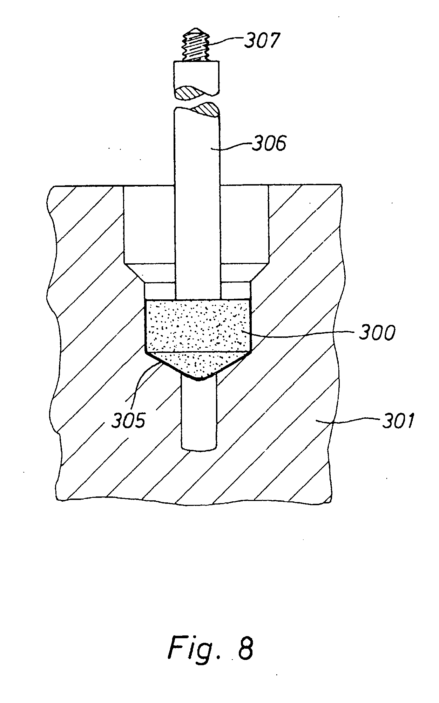

Das Ausführungsbeispiel mit axialer Zustellung der Stange 306 nach den Figuren 6 und 7 dient einer Bearbeitungsaufgabe, die an Hand von Figur 8 erläutert wird. Werkzeug ist ein kegliger Feinstschleifkörper 300 dient zur Bearbeitung einer Ventilsitzfläche 305. Die Ventilsitzfläche 305 muss dabei um ein definiertes Maß, z.B. einige hunderstel Millimeter abgetragen werden, das z.B. mittels eines Sensor errechnet wird. Dabei sind gleichzeitig Form und Oberfläche zu verbessern. Der keglige Feinstschleifkörper 300 ist an der Stange 306 angeordnet, die an ihrem Ende mit einem Gewindezapfen 307 versehen ist. Dieser wird mit dem Ende der Schubstange 120 verbunden. Auf diese Weise können kleinste Zustellwege mit Hilfe des Servomotors 10 oder des weiteren Linearmotors 200 realisiert werden. Dies kann entweder in einem Hub oder mit mehreren kleinen Hüben erfolgen, die intermittierend Anwendung finden, z.B. zum Ausfeuern nach nur relativ wenig Umdrehungen oder um jeweils nach einem Hub mit Kühlmittel zu spülen.

## Patentansprüche

1. Maschine zur Feinstbearbeitung von Werkstücken durch Honen mit einer von einem Elektromotor (9) antreibbaren in einem Spindelgehäuse (8) gelagerten Honspindel (7), deren Hubewegung durch einen Linearmotor (18) bewirkt wird, dessen unbewegter Teil am Maschinenrahmen (16) und an dessen bewegtem Teil, dem daufschlitten (12), das Spindelgehäuse (8) angeordnet ist, und bei der in der Honspindel (7) eine Stange (11), mitdrehend und in der Honspindel (7) durch einen Servomotor (10) axial verschiebbar, angeordnet ist, die zur Aufweitung eines an der Honspindel (7) angeordneten Honwerkzeugs (5) dient, **dadurch gekennzeichnet, dass** der Elektromotor (9) durch einen in das Spindelgehäuse (8) integrierten Stator (25) und einen in dem Stator (25) drehbaren Rotor (26) gebildet wird, und dass der Rotor (26) außen auf der Honspindel (7) angeordnet ist, und ferner am Ende des Spindelgehäuses (8) ein Kupplungsgehäuse (51) und an diesem der Servomotor (10) koaxial angeflanscht sind.

2. Maschine nach Anspruch 1 **dadurch gekennzeichnet, dass** die Abtriebswelle (50) des Servomotors (10) in ein Kupplungsstück (49) eingreift und dieses dreht, dass das Kupplungsstück (49) einen mit einem Außengewinde (56') versehenen Stößel (47) aufweist, der in das Innengewinde (56) einer Verstellhülse (53) eingreift, die sich bei Drehung des Kupplungsstücks (49) in Folge des Eingriffs der beiden Gewinde (56, 56') axial verschiebt und mit der, im Getriebegehäuse (51) axial verschiebbar, jedoch nicht drehbar, eine weitere Hülse (52) verbunden ist, in der eine Schubstange (110) drehbar angeordnet ist, die mit der Stange (11) eine Einheit bildet und gemeinsam mit dieser bei Drehung des Servomotors (10) in Achsrichtung verschoben wird.

3. Maschine zur Feinstbearbeitung von Werkstücken durch Feinstschleifen mit einer von einem Elektromotor (9) antreibbaren in einem Spindelgehäuse (8) gelagerten Werkzeugspindel (7), deren Zustellbewegung durch einen Linearmotor (18) bewirkt wird, dessen unbewegter Teil am Maschinenrahmen (16) und an dessen bewegtem Teil, dem Laufschlitten (12), das Spindelgehäuse (8) angeordnet ist, und bei der in der Werkzeugspindel (7) eine Stange (11), die als Träger eines Schleifkörpers dient, mitdrehend und in der Honspindel (7) durch einen weiteren Elektromotor (200) axial verschiebbar angeordnet ist, **dadurch gekennzeichnet, dass** der erstgenannte Elektromotor (9) durch einen in das Spindelgehäuse (8) integrierten Stator (25) und einen in dem Stator (25) drehbaren Rotor (26) gebildet wird, dass der Rotor (26) außen auf der Spindel (7) angeordnet ist, und dass am Ende des Spindelgehäuses (8) ein Kupplungsgehäuse (51) und an diesem ein weiterer Linearmotor (200), mit Hilfe einer Klemmplatte (210), koaxial angeflanscht ist, dessen Läufer (201) mit einer Verstellhülse (253) fest verbunden ist, in der die Schubstange (120) drehbar aber gegenüber dieser axial nicht verschiebbar angeordnet ist.

## Claims

1. Machine for superfinishing of workpieces by honing, comprising a honing spindle (7) which can be driven by an electric motor (9) and is mounted in a spindle housing (8) and the reciprocating movement of which is brought about by a linear motor (18), the stationary part of which is arranged on the machine frame (16) and on the moving part of which, the carriage (12), the spindle housing (8) is arranged, and in which a rod (11) is arranged in the honing spindle (7) so as to be co-rotating and axially displaceable in the honing spindle (7) by a servo motor (10), which rod (11) serves for expanding a honing tool (5) arranged on the honing spindle (7), **characterized in that** the electric motor (9) is formed by a stator (25) integrated in the spindle housing (8) and a rotor (26) rotatable in the stator (25), and **in that** the rotor (26) is arranged on the outside of the honing spindle (7), and furthermore a coupling housing (51) is coaxially flange-connected to the end of the spindle housing (8) and the servo motor (10) is coaxially flange-connected to said coupling housing (51).

2. Machine according to Claim 1, **characterized in that** the output shaft (50) of the servo motor (10) engages a coupling piece (49) and rotates with it, **in that** the coupling piece (49) has a ram (47) which is provided with an external thread (56') and engages the internal thread (56) of an adjusting sleeve (53) which moves axially on rotation of the coupling piece (49) as a result of the engagement of the two threads (56, 56') and to which a further sleeve (52), axially displaceable in the gear housing (51) but nonrotatable, is connected, in which sleeve (52) a connecting rod (110) is rotatably arranged, which connecting rod (110) forms a unit with the rod (11) and, together with this, is displaced in the axial direction on rotation of the servo motor (10).

3. Machine for superfinishing of workpieces by precision grinding, comprising a tool spindle (7) which can be driven by an electric motor (9) and is mounted in a spindle housing (8) and the feed movement of which is brought about by a linear motor (18), the stationary part of which is arranged on the machine frame (16) and on the moving part of which, the carriage (12), the spindle housing (8) is arranged, and in which a rod (11) which serves as a support of a grinding body is arranged in the tool spindle (7) so as to be co-rotating and axially displaceable in the honing spindle (7) by a further electric motor (200), **characterized in that** the first-mentioned electric motor (9) is formed by a stator (25) integrated in the spindle housing (8) and a rotor (26) rotatable in the stator (25), **in that** the rotor (26) is arranged on the outside of the spindle (7), and **in that** a coupling housing (51) is coaxially flange-connected to the end of the spindle housing (8) and a further linear motor (200) is coaxially flange-connected, with the aid of a clamping plate (210), to said coupling housing (51), the rotor (201) of which linear motor (200) is firmly connected to an adjusting sleeve (253) in which the connecting rod (120) is arranged so as to be rotatable but not axially displaceable relative thereto.

## Revendications

1. Machine pour l'usinage de précision de pièces par rodage, comportant une broche porte-rodoir (7), qui est montée dans un carter de broche (8) de manière à pouvoir être actionnée par un moteur électrique (9) et dont le mouvement de levage est assuré par un moteur linéaire (18), dont la partie immobile est montée sur le bâti (16) de la machine et dont la partie mobile, à savoir le chariot (12), porte le carter de broche (8), et dans laquelle une tige (11) est agencée dans la broche porte-rodoir (7) de manière à être entraînée en rotation et à pouvoir être déplacée axialement dans la broche porte-rodoir (7) au moyen d'un servomoteur (10), et laquelle tige est destinée à élargir un rodoir (5) monté sur la broche (7), **caractérisée en ce que** le moteur électrique (9) est formé par un stator (25), intégré dans le carter de broche (8), et un rotor (26) agencé pour tourner dans le stator (25), et **en ce que** le rotor (26) est monté à l'extérieur sur la broche porte-rodoir (7), et **en ce qu'**un carter d'embrayage (51) est fixé par bride coaxialement sur l'extrémité du carter de broche (8), et le servomoteur (10) est fixé par bride coaxialement sur ledit carter d'embrayage.

2. Machine selon la revendication 1, **caractérisée en ce que** l'arbre d'entraînement (50) du servomoteur (10) s'accroche dans une pièce de couplage (49) et fait tourner celle-ci, **en ce que** la pièce de couplage (49) comporte un poussoir (47), qui est muni d'un filetage extérieur (56') et qui engrène dans le filetage intérieur (56) d'un manchon de réglage (53) qui se déplace axialement lors de la rotation de la pièce de couplage (49) par suite de l'engrènement des deux filetages (56, 56'), et auquel est relié un manchon (52) supplémentaire, qui est mobile axialement dans la boîte de transmission (51), mais est immobile en rotation, et dans lequel est agencée de manière rotative une tige de poussée (110), qui forme une unité avec la tige (11) et qui peut être déplacée dans la direction axiale, conjointement avec cette dernière, lors de la rotation du servomoteur (10).

3. Machine pour l'usinage de précision de pièces par meulage de précision, comportant une broche porte-outil (7), qui est montée dans un carter de broche (8) de manière à pouvoir être actionnée par un moteur électrique (9) et dont le mouvement d'approche est assuré par un moteur linéaire (18), dont la partie immobile est montée sur le bâti (16) de la machine et dont la partie mobile, à savoir le chariot (12), porte le carter de broche (8), et dans laquelle une tige (11), faisant fonction de porte-meule, est agencée dans la broche porte-outil (7) de manière à être entraînée en rotation et à pouvoir être déplacée axialement dans la broche porte-outil (7) au moyen d'un moteur électrique supplémentaire (200), **caractérisée en ce que** le moteur électrique (9), cité en premier lieu, est formé par un stator (25), intégré dans le carter de broche (8), et un rotor (26) agencé pour tourner dans le stator (25), **en ce que** le rotor (26) est monté à l'extérieur sur la broche (7), et **en ce qu'**un carter d'embrayage (51) est fixé par bride coaxialement sur l'extrémité du carter de broche (8), et le moteur linéaire supplémentaire (200) est fixé par bride coaxialement sur ledit carter d'embrayage au moyen d'une plaque de serrage (210), le rotor (201) dudit moteur linéaire étant relié de manière fixe à un manchon de réglage (253), dans lequel la tige de poussée (120) est agencée de manière rotative, mais immobile axialement par rapport à ce dernier.
